(19) Europäisches Patentamt
European Patent Office
Office européen des brevets

(11) EP 4 286 431 A1

(12) EUROPEAN PATENT APPLICATION
published in accordance with Art. 153(4) EPC

(43) Date of publication:
**06.12.2023 Bulletin 2023/49**

(21) Application number: **22746005.2**

(22) Date of filing: **28.01.2022**

(51) International Patent Classification (IPC):
***C08F 287/00** (2006.01)* ***C08L 23/02** (2006.01)*
***C08L 53/00** (2006.01)* ***C08L 53/02** (2006.01)*
***C08L 57/02** (2006.01)* ***C08J 5/18** (2006.01)*

(52) Cooperative Patent Classification (CPC):
**C08F 287/00; C08J 5/18; C08L 23/02; C08L 53/00; C08L 53/02; C08L 57/02**

(86) International application number:
**PCT/JP2022/003193**

(87) International publication number:
**WO 2022/163786 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.01.2021 JP 2021013626**

(71) Applicant: **Kuraray Co., Ltd.**
**Kurashiki-shi, Okayama 710-0801 (JP)**

(72) Inventors:
- **KONISHI, Daisuke**
  **Kamisu-shi, Ibaraki 314-0197 (JP)**
- **SASAKI, Hiromitsu**
  **Kamisu-shi, Ibaraki 314-0197 (JP)**
- **SEKIGUCHI, Takahiro**
  **Kamisu-shi, Ibaraki 314-0197 (JP)**
- **TOMISHIMA, Yuta**
  **Kamisu-shi, Ibaraki 314-0197 (JP)**
- **HASEGAWA, Takumi**
  **Kamisu-shi, Ibaraki 314-0197 (JP)**

(74) Representative: **Müller-Boré & Partner Patentanwälte PartG mbB**
**Friedenheimer Brücke 21**
**80639 München (DE)**

# (54) RESIN COMPOSITION AND MOLDED BODY

(57) The present invention relates to a resin composition containing: a block copolymer (A) having a polymer block (a1) containing a structural unit derived from an aromatic vinyl compound and a polymer block (a2) containing a structural unit derived from farnesene; a block copolymer (B) having a polymer block (b1) containing a structural unit derived from an aromatic vinyl compound and a polymer block (b2) containing 30 mol% or more of a structural unit derived from isoprene; a plasticizer (C); and a biomass-derived polyolefin-based resin (D), in which the resin composition has a biobased content of 37% by mass or more, and a molded body obtained by using the resin composition.

EP 4 286 431 A1

## Description

Technical Field

The present invention relates to a resin composition having a biobased content of a certain level or more, and a molded body obtained by using the resin composition.

Background Art

Thermoplastic resins are widely used for various packaging materials, household electric appliances, machine parts, automobile parts, industrial parts, and the like because they are lightweight and have excellent moldability, and some of them are also excellent in strength, heat resistance, and the like. In addition, there is an increasing demand for using biomass-derived raw materials for these members due to an increase in environmental awareness.

Examples of the biomass-derived raw material include biomass-derived β-farnesene. Techniques have been disclosed for imparting various physical properties to a block copolymer having a polymer block containing a structural unit derived from β-farnesene and a polymer block containing a structural unit derived from an aromatic vinyl compound while being conscious of reducing environmental load (PTLs 1 to 5).

Citation List

Patent Literature

PTL 1: WO 2018/232200 A
PTL 2: JP 2019-052225 A
PTL 3: WO 2020/102074 A
PTL 4: JP 2018-024778 A
PTL 5: JP 2019-011472 A

Summary of Invention

Technical Problem

Further, a member using a thermoplastic resin is required to maintain its physical properties even when used in a severe environment. For example, an increase in hardness at a low temperature may cause breakage of a molded body, and there is a demand for a member having physical properties such that the physical properties can be maintained even when exposed to a low temperature. Further, design property may be required for the member, and a resin composition containing a thermoplastic resin is required to have moldability capable of imparting a good design. However, PTLs 1 to 5 do not discuss a technique for imparting these physical properties to a resin composition.

In addition, by using a biomass-derived raw material, the environmental load can be reduced, but at the same time, it is not easy to maintain physical properties at a low temperature and to obtain excellent moldability.

Therefore, an object of the present invention is to provide a resin composition having excellent moldability, which can provide a molded body having a reduced environmental load and in which physical properties are not likely to decrease even at a low temperature, and a molded body obtained by using the resin composition.

Solution to Problem

As a result of intensive studies to solve the above problems, the present inventors have conceived the following present invention and found that the problems can be solved.

That is, the present invention is as follows.

[1] A resin composition containing: a block copolymer (A) having a polymer block (a1) containing a structural unit derived from an aromatic vinyl compound and a polymer block (a2) containing a structural unit derived from farnesene; a block copolymer (B) having a polymer block (b1) containing a structural unit derived from an aromatic vinyl compound and a polymer block (b2) containing 30 mol% or more of a structural unit derived from isoprene; a plasticizer (C); and a biomass-derived polyolefin-based resin (D), in which the resin composition has a biobased content of 37% by mass or more.

[2] A molded body obtained by using the resin composition as set forth in [1].

Advantageous Effects of Invention

According to the present invention, it is possible to provide a resin composition having excellent moldability, which can provide a molded body having a reduced environmental load and in which physical properties are not likely to decrease even at a low temperature, and a molded body obtained by using the resin composition.

Brief Description of Drawings

Fig. 1 is a schematic view showing measurement points of surface roughness in an emboss processed sheet in Examples and Comparative Examples.

Description of Embodiments

Hereinafter, a description will be given based on an example of an embodiment of the present invention. However, the embodiment shown below is an example for embodying the technical idea of the present invention, and the present invention is not limited to the following description.
In addition, in the description herein, preferred embodiments are shown, but a combination of two or more of the individual preferred embodiments is also a preferred embodiment. Regarding matters indicated by numerical ranges, in a case where there are several numerical ranges, the lower limit value and the upper limit value thereof can be selectively combined to form a preferred embodiment. When the numerical range is described as "XX to YY", it means "XX or more and YY or less".
Further, in the description herein, "biobased content" is an indicator showing a content percentage of a bio-derived material in a target material measured in accordance with ASTM D6866-16. For example, "biobased content of the resin composition" means a content percentage of the bio-derived raw materials in the resin composition measured in accordance with ASTM D6866-16. In addition, "biobased content of the resin" means a content percentage of the bio-derived raw materials in the resin measured in accordance with ASTM D6866-16.

<Resin Composition>

[Block Copolymer (A)]

By containing the block copolymer (A), the resin composition of the present embodiment becomes excellent in flexibility, becomes easy to suppress a decrease in physical properties at a low temperature, and can express excellent moldability.
The block copolymer (A) has a polymer block (a1) containing a structural unit derived from an aromatic vinyl compound and a polymer block (a2) containing a structural unit derived from farnesene.
The block copolymer (A) may be used alone or in combination of two or more kinds thereof.

(Polymer Block (a1))

The polymer block (a1) contains a structural unit derived from an aromatic vinyl compound. Examples of the aromatic vinyl compound include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, and divinylbenzene. These aromatic vinyl compounds may be used alone or in combination of two or more kinds thereof. Among these, styrene, α-methylstyrene, and 4-methylstyrene are preferable, and styrene is more preferable.
The polymer block (a1) may contain a structural unit derived from a monomer other than the aromatic vinyl compound, for example, another monomer such as a monomer constituting the polymer block (a2) described later. However, the content of the structural unit derived from an aromatic vinyl compound in the polymer block (a1) is preferably 60% by mass or more, more preferably 70% by mass or more, still more preferably 80% by mass or more, even more preferably 90% by mass or more, and particularly preferably 100% by mass. The upper limit of the content of the structural unit derived from an aromatic vinyl compound in the polymer block (a1) may be 100% by mass, may be 99% by mass, or may be 98% by mass.
The total content of the polymer block (a1) in the block copolymer (A) is preferably 1% to 65% by mass, preferably 5% to 60% by mass, more preferably 5% to 50% by mass, still more preferably 10% to 40% by mass, and

even more preferably 10% to 35% by mass. In a case where the content is 1% by mass or more, excellent moldability is easily exhibited in the resin composition. In addition, in a case where the content is 65% by mass or less, it can be expected that tear strength, tensile properties, and the like are exhibited while sufficient flexibility is provided.

(Polymer Block (a2))

The polymer block (a2) contains a structural unit derived from farnesene.

The farnesene may be any of α-farnesene and β-farnesene represented by the following formula (1), but β-farnesene is preferred from the viewpoint of the ease of production of the block copolymer (A). The α-farnesene and the β-farnesene may be used in combination.

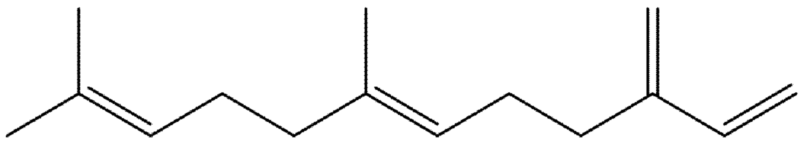

(1)

The content of the structural unit derived from farnesene in the polymer block (a2) is preferably 1% to 100% by mass. In a case where the polymer block (a2) contains the structural unit derived from farnesene, flexibility becomes satisfactory and moldability becomes excellent. From the above viewpoint, the content of the structural unit derived from farnesene in the polymer block (a2) is more preferably 10% to 100% by mass, still more preferably 20% to 100% by mass, even more preferably 30% to 100% by mass, particularly preferably 50% to 100% by mass, and most preferably 100% by mass. That is, the polymer block (a2) is most preferably a polymer block consisting only of a structural unit derived from farnesene.

In addition, when farnesene is bio-derived, the amount of conjugated diene compounds other than farnesene, such as petroleum-derived butadiene and isoprene, used can be suppressed, the dependence on oil can be reduced, and it is possible to further contribute to the reduction of environmental load. From the above viewpoint, the content of the structural unit derived from farnesene in the polymer block (a2) is preferably 50% to 100% by mass, more preferably 60% to 100% by mass, still more preferably 70% to 100% by mass, even more preferably 80% to 100% by mass, and particularly preferably 90% to 100% by mass.

In addition, in a case where the polymer block (a2) contains a structural unit derived from a conjugated diene compound other than farnesene which will be described later, the content of the structural unit derived from farnesene in the polymer block (a2) is more preferably 10% by mass or more, still more preferably 20% by mass or more, even more preferably 30% by mass or more, particularly preferably 50% by mass or more, and most preferably 70% by mass or more.

In a case where the structural unit constituting the polymer block (a2) is a β-farnesene unit, as a bonding form of β-farnesene, a 1,2-bond, a 1,13-bond, or a 3,13-bond can be adopted. Among these, a 1,2-bond and a 3,13-bond of β-farnesene are defined as a vinyl bond. The content of the vinyl bond unit (hereinafter, sometimes simply referred to as "vinyl bond amount") is preferably 1 to 35 mol%, more preferably 1 to 30 mol%, still more preferably 1 to 25 mol%, and even more preferably 1 to 20 mol%.

Here, the vinyl bond amount is a value calculated by $^1$H-NMR measurement according to the method described in Examples.

The polymer block (a2) may contain a structural unit derived from a conjugated diene compound other than farnesene.

Examples of the conjugated diene compound other than farnesene include isoprene, butadiene, 2,3-dimethyl-butadiene, 2-phenyl-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, and chloroprene. These may be used alone or in combination of two or more kinds thereof. Among these, isoprene, butadiene, and myrcene are preferable, and isoprene and butadiene are more preferable.

In a case where the polymer block (a2) contains a structural unit derived from a conjugated diene compound other than farnesene, the content of the structural unit derived from a conjugated diene compound other than farnesene is more preferably 90% by mass or less, still more preferably 80% by mass or less, even more preferably 70% by mass or less, particularly preferably 50% by mass or less, and most preferably 30% by mass or less, and the lower limit value may be 0% by mass.

The polymer block (a2) may contain another structural unit in addition to the structural unit derived from farnesene and the structural unit derived from a conjugated diene compound other than farnesene. The total content of the structural unit derived from farnesene and the structural unit derived from a conjugated diene compound other than farnesene in the polymer block (a2) is preferably 60% by mass or more, more preferably 80% by mass or more, and still more

preferably 100% by mass.

(Polymer Block (a3))

The block copolymer (A) can further have a polymer block (a3) containing a structural unit derived from a conjugated diene compound other than farnesene, in addition to the polymer block (a1) and the polymer block (a2) described above.

The polymer block (a3) is preferably a polymer block in which the content of a structural unit derived from farnesene is 0% by mass or more and less than 1% by mass, and the content of a structural unit derived from a conjugated diene compound other than farnesene is 1% to 100% by mass.

Examples of the farnesene constituting the structural unit derived from farnesene and the conjugated diene compound constituting the structural unit derived from a conjugated diene compound other than farnesene include those similar to the farnesene constituting the structural unit derived from farnesene and the conjugated diene compound constituting the structural unit derived from a conjugated diene compound other than farnesene described above.

As the conjugated diene compound constituting the structural unit derived from a conjugated diene compound other than farnesene, isoprene, butadiene, and myrcene are preferable, and isoprene and butadiene are more preferable. These may be used alone or in combination of two or more kinds thereof.

The content of the structural unit derived from farnesene in the polymer block (a3) is preferably 0% by mass.

The content of the structural unit derived from a conjugated diene compound other than farnesene in the polymer block (a3) is more preferably 60% to 100% by mass, still more preferably 80% to 100% by mass, even more preferably 90% to 100% by mass, and particularly preferably 100% by mass.

In a case where the structural unit constituting the polymer block (a3) is any one of an isoprene unit, a butadiene unit, and a mixture unit of isoprene and butadiene, as a bonding form of each of isoprene and butadiene, a 1,2-bond, a 3,4-bond or a 1,4-bond can be adopted in the case of isoprene, and a 1,2-bond or a 1,4-bond can be adopted in the case of butadiene. Among these, the total content of the 3,4-bond unit and the 1,2-bond unit (hereinafter, sometimes simply referred to as "vinyl bond amount") is preferably 1 to 35 mol%, more preferably 1 to 30 mol%, still more preferably 1 to 25 mol%, and even more preferably 1 to 20 mol%.

In a case where the conjugated diene compound has only a butadiene unit, the "vinyl bond amount" means the content of 1,2-bond units.

Here, the vinyl bond amount is a value calculated by $^{1}$H-NMR measurement according to the method described in Examples.

In addition, the polymer block (a3) may contain another structural unit in addition to the structural unit derived from farnesene and the structural unit derived from a conjugated diene compound other than farnesene.

The total content of the structural unit derived from farnesene and the structural unit derived from a conjugated diene compound other than farnesene in the polymer block (a3) is preferably 60% by mass or more, more preferably 80% by mass or more, and still more preferably 100% by mass.

(Bonding Form)

The block copolymer (A) is a block copolymer having at least one polymer block (a1) and at least one polymer block (a2).

The bonding form of the polymer block (a1) and the polymer block (a2) is not particularly limited, and may be linear, branched, radial, or a combination of two or more thereof. Among these, a form in which each block is linearly bonded is preferable.

Examples of the linear bonding form include a bonding form represented by $(A\text{-}B)_l$, $A\text{-}(B\text{-}A)_m$, or $B\text{-}(A\text{-}B)_n$ when the polymer block (a1) is represented by A and the polymer block (a2) is represented by B. Note that 1, m, and n each independently represent an integer of 1 or more.

In a case where the block copolymer (A) has at least one polymer block (a1) and at least one polymer block (a2), the block copolymer (A) is preferably a triblock copolymer represented by A-B-A in a bonding form having blocks in the order of the polymer block (a1), the polymer block (a2), and the polymer block (a1).

That is, the block copolymer (A) is preferably a triblock copolymer represented by A-B-A, and the triblock copolymer may be an unhydrogenated product or may be a hydrogenated product. When the resin composition of the present invention is used for an application in which heat resistance is particularly important, the triblock copolymer is preferably a hydrogenated product.

In a case where the block copolymer (A) has the polymer block (a1), the polymer block (a2), and the polymer block (a3), the block copolymer (A) is preferably a block copolymer having at least one polymer block (a2) at a terminal, and the block copolymer may be an unhydrogenated products or may be a hydrogenated product. The presence of at least one polymer block (a2) at the terminal of the polymer chain improves the moldability. From the above viewpoint,

in a case where the block copolymer (A) has a linear shape, it is more preferable to have the polymer block (a2) at both terminals thereof. In addition, in a case where the block copolymer (A) has a branched shape or a radial shape, the number of polymer blocks (a2) present at the terminals is preferably 2 or more, and more preferably 3 or more.

Further, the block copolymer (A) may be a block copolymer having at least two polymer blocks (a1), at least one polymer block (a2), and at least one polymer block (a3). Furthermore, the block copolymer (A) may be a block copolymer containing at least two polymer blocks (a1), at least one polymer block (a2), and at least one polymer block (a3), and having one or more of the at least one polymer block (a2) at the terminal.

When the block copolymer (A) has the polymer block (a1), the polymer block (a2), and the polymer block (a3), the bonding form of the plurality of polymer blocks is not particularly limited, and may be linear, branched, radial, or a combination of two or more thereof. Among these, a form in which each block is linearly bonded is preferable.

When the polymer block (a1) is represented by A, the polymer block (a2) is represented by B, and the polymer block (a3) is represented by C, the block copolymer (A) preferably has a structure having blocks in the order of the polymer block (a2), the polymer block (a1), and the polymer block (a3), that is, a structure of B-A-C.

Specifically, the block copolymer (A) is preferably a tetrablock copolymer represented by B-A-C-A, a pentablock copolymer represented by B-A-C-A-B, or a copolymer represented by B-A-$(C-A)_p$-B, B-A-$(C-A-B)_q$, or B-$(A-C-A-B)_r$ (p, q, and r each independently represent an integer of 2 or more), and among them, more preferably a pentablock copolymer represented by B-A-C-A-B.

That is, the block copolymer (A) is preferably a pentablock copolymer represented by B-A-C-A-B, and the pentablock copolymer may be an unhydrogenated product or may be a hydrogenated product. When the resin composition of the present invention is used for an application in which heat resistance is particularly important, the pentablock copolymer is preferably a hydrogenated product.

Here, in the description herein, when the same type of polymer block is linearly bonded via a divalent coupling agent or the like, the bonded polymer block as a whole is treated as one polymer block. Accordingly, the polymer block to be originally strictly expressed as A-X-A (X represents a coupling agent residue) is represented as A as a whole. In the description herein, since this type of polymer block containing a coupling agent residue is treated as described above, for example, a block copolymer containing a coupling agent residue and to be strictly expressed as B-A-C-X-C-A-B is expressed as B-A-C-A-B and treated as an example of a pentablock copolymer.

The two or more polymer blocks (a1) in the block copolymer (A) may be polymer blocks composed of the same structural unit or may be polymer blocks composed of different structural units. Similarly, in a case where the block copolymer (A) has two or more polymer blocks (a2) or two or more polymer blocks (a3), each of the polymer blocks may be polymer blocks composed of the same structural unit or may be polymer blocks composed of different structural units. For example, in the two polymer blocks (a1) in the triblock copolymer represented by A-B-A, the respective aromatic vinyl compounds may be the same or different.

When the block polymer (A) has the polymer block (a1) and the polymer block (a2) but does not have the polymer block (a3), the mass ratio [(a1)/(a2)] of the polymer block (a1) to the polymer block (a2) is preferably 1/99 to 65/35, more preferably 5/95 to 60/40, still more preferably 5/95 to 50/50, even more preferably 10/90 to 40/60, and particularly preferably 10/90 to 35/65. Within the above range, a resin composition having excellent flexibility and further excellent moldability can be obtained.

When the block copolymer (A) has the polymer block (a1), the polymer block (a2), and the polymer block (a3), the mass ratio [(a1)/(a2)] of the polymer block (a1) to the polymer block (a2) is 1/99 to 70/30, preferably 5/95 to 60/40, more preferably 10/90 to 50/50, still more preferably 20/80 to 40/60, and even more preferably 25/75 to 35/65. Within the above range, a resin composition having excellent flexibility and further excellent moldability can be obtained.

In the block copolymer (A), the mass ratio [(a1)/((a2) + (a3))] of the polymer block (a1) to the total amount of the polymer block (a2) and the polymer block (a3) is preferably 1/99 to 70/30. The mass ratio [(a1)/((a2) + (a3))] is more preferably 1/99 to 60/40, still more preferably 10/90 to 40/60, even more preferably 10/90 to 30/70, and particularly preferably 15/85 to 25/75.

When the block polymer (A) has the polymer block (a1) and the polymer block (a2) but does not have the polymer block (a3), the total content of the polymer block (a1) and the polymer block (a2) in the block polymer is preferably 80% by mass or more, more preferably 90% by mass or more, still more preferably 95% by mass or more, and even more preferably 100% by mass. The upper limit of the total content of the polymer block (a1) and the polymer block (a2) may be 100% by mass. One embodiment of the block copolymer (A) includes, for example, a block copolymer composed of at least one polymer block (a1) and at least one polymer block (a2).

In addition, in a case where the block copolymer (A) has the polymer block (a1), the polymer block (a2), and the polymer block (a3), the total content of these polymer blocks (a1) to (a3) in the block copolymer (A) is preferably 80% by mass or more, more preferably 90% by mass or more, still more preferably 95% by mass or more, and even more preferably 100% by mass. The upper limit of the total content of the polymer blocks (a1) to (a3) may be 100% by mass. One embodiment of the block copolymer (A) includes, for example, a block copolymer composed of at least one polymer block (a1), at least one polymer block (a2), and at least one polymer block (a3).

An example of a more preferred embodiment of the block copolymer (A) is a block copolymer in which: the block copolymer having the polymer block (a1) and the polymer block (a2) is hydrogenated; the mass ratio [(a1)/(a2)] of the polymer block (a1) to the polymer block (a2) is 15/85 to 35/65; at least two polymer blocks (a1) and at least one polymer block (a2) are contained, and the blocks are arranged in the order of the polymer block (a1), the polymer block (a2), and the polymer block (a1); and the hydrogenation rate of carbon-carbon double bonds in the structural unit derived from a conjugated diene compound in the block copolymer (A) is 70 mol% or more, from the viewpoints of moldability, suppression of a decrease in physical properties at a low temperature, and tear strength and tensile properties.

An example of another more preferred embodiment of the block copolymer (A) is a block copolymer in which: the block copolymer having the polymer block (a1), the polymer block (a2), and the polymer block (a3) is hydrogenated; the mass ratio [(a1)/((a2) + (a3))] of the polymer block (a1) to the total amount of the polymer block (a2) and the polymer block (a3) is 15/85 to 25/75; at least two polymer blocks (a1), at least one polymer block (a2), and at least one polymer block (a3) are contained, and one or more of the at least one polymer block (a2) are present at the terminal; and the hydrogenation rate of carbon-carbon double bonds in the structural unit derived from a conjugated diene compound in the block copolymer (A) is 70 mol% or more, from the viewpoints of moldability, suppression of a decrease in physical properties at a low temperature, and tear strength and tensile properties.

(Polymer Block Composed of Other Monomers)

The block copolymer (A) may have a polymer block composed of other monomers, in addition to the polymer block (a1), the polymer block (a2), and the polymer block (a3), as long as the effects of the present invention are not impaired.

Examples of such other monomers include unsaturated hydrocarbon compounds such as propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, and 1-eicosene; and functional group-containing unsaturated compounds such as acrylic acid, methacrylic acid, methyl acrylate, methyl methacrylate, acrylonitrile, methacrylonitrile, maleic acid, fumaric acid, crotonic acid, itaconic acid, 2-acryloyl ethane sulfonic acid, 2-methacryloyl ethane sulfonic acid, 2-acrylamido-2-methyl propane sulfonic acid, 2-methacrylamido-2-methyl propane sulfonic acid, vinyl sulfonic acid, vinyl acetate, and methyl vinyl ether. These may be used alone or in combination of two or more kinds thereof.

When the block copolymer (A) has another polymer block, the content thereof is preferably 10% by mass or less, and more preferably 5% by mass or less.

(Method for Producing Block Copolymer (A))

The block copolymer (A) can be suitably produced by, for example, a polymerization step by anionic polymerization. In addition, even in the case where the block copolymer (A) is a block copolymer having the polymer block (a1), the polymer block (a2) and the polymer block (a3), it can be suitably produced by a polymerization step by anionic polymerization. Further, when the block copolymer (A) is a hydrogenated block copolymer, it can be suitably produced by a step of hydrogenating a carbon-carbon double bond in the structural unit derived from a conjugated diene compound in the block copolymer.

<Polymerization Step>

The block copolymer (A) can be produced by a solution polymerization method, a method described in JP 2012-502135 T and JP 2012-502136 T, or the like. Among these, a solution polymerization method is preferable, and for example, a known method such as an ionic polymerization method such as anionic polymerization or cationic polymerization, or a radical polymerization method can be applied. Among these, an anionic polymerization method is preferable. In the anionic polymerization method, for example, an aromatic vinyl compound, farnesene, and optionally a conjugated diene compound other than farnesene, and the like are sequentially added in the presence of a solvent, an anionic polymerization initiator, and if necessary, a Lewis base, whereby a block copolymer can be obtained.

Examples of the anionic polymerization initiator include alkali metals such as lithium, sodium, and potassium; alkaline earth metals such as beryllium, magnesium, calcium, strontium, and barium; lanthanoid rare earth metals such as lanthanum and neodymium; and compounds containing the alkali metals, the alkaline earth metals, and the lanthanoid rare earth metals. Among these, a compound containing an alkali metal or an alkaline earth metal is preferable, and an organic alkali metal compound is more preferable.

Examples of the organic alkali metal compound include organic lithium compounds such as methyllithium, ethyllithium, n-butyllithium, sec-butyllithium, t-butyllithium, hexyllithium, phenyllithium, stilbenelithium, dilithiomethane, dilithionaphthalene, 1,4-dilithiobutane, 1,4-dilithio-2-ethylcyclohexane, and 1,3,5-trilithiobenzene; sodium naphthalene,

and potassium naphthalene. Among these, organic lithium compounds are preferable, n-butyllithium and sec-butyllithium are more preferable, and sec-butyllithium is still more preferable. The organic alkali metal compound may be reacted with a secondary amine such as diisopropylamine, dibutylamine, dihexylamine or dibenzylamine to form an organic alkali metal amide.

The amount of the organic alkali metal compound used for the polymerization varies depending on the molecular weight of the block copolymer (A), but is usually in the range of 0.01% to 3% by mass with respect to the total amount of the aromatic vinyl compound, farnesene, and the conjugated diene compound other than farnesene.

The solvent is not particularly limited as long as it does not adversely affect the anionic polymerization reaction, and examples thereof include saturated aliphatic hydrocarbons such as n-pentane, isopentane, n-hexane, n-heptane, and isooctane; saturated alicyclic hydrocarbons such as cyclopentane, cyclohexane, and methylcyclopentane; and aromatic hydrocarbons such as benzene, toluene, and xylene. These may be used alone or in combination of two or more kinds thereof. The amount of the solvent used is not particularly limited.

The Lewis base plays a role in controlling the microstructure of the structural unit derived from farnesene and the structural unit derived from a conjugated diene compound other than farnesene. Examples of the Lewis base include ether compounds such as dibutyl ether, diethyl ether, tetrahydrofuran, dioxane, and ethylene glycol diethyl ether; pyridine; tertiary amines such as N,N,N',N'-tetramethylethylenediamine and trimethylamine; alkali metal alkoxides such as potassium t-butoxide; and phosphine compounds. When a Lewis base is used, the amount thereof is usually preferably in the range of 0.01 to 1000 molar equivalents with respect to 1 mol of the anionic polymerization initiator.

The temperature of the polymerization reaction is usually in the range of about -80°C to 150°C, preferably 0°C to 100°C, and more preferably 10°C to 90°C. The type of the polymerization reaction may be a batch type or a continuous type. The block copolymer (A) can be produced by continuously or intermittently supplying each monomer into the polymerization reaction liquid or sequentially polymerizing each monomer in a specific ratio in the polymerization reaction liquid so that the amounts of the aromatic vinyl compound, farnesene, and optionally a conjugated diene compound other than farnesene and the like in the polymerization reaction system fall within a specific range.

The polymerization reaction can be terminated by adding an alcohol such as methanol or isopropanol as a polymerization terminator. The block copolymer can be isolated by pouring the obtained polymerization reaction liquid into a poor solvent such as methanol to precipitate the block copolymer, or by washing the polymerization reaction liquid with water, followed by separation and drying.

An example of a preferred embodiment of the block copolymer (A) includes a structure having a polymer block (a1), a polymer block (a2), and a polymer block (a1) in this order. Therefore, a step of obtaining the block copolymer (A) by producing the polymer block (a1), the polymer block (a2), and the polymer block (a1) in this order is preferable. In the case of a hydrogenated product, it is more preferable to produce a hydrogenated block copolymer (A) by a method including a step of hydrogenating further obtained block copolymer (A).

In the production of the block copolymer (A), a coupling agent can be used from the viewpoint of efficient production.

Examples of the coupling agent include divinylbenzene; polyvalent epoxy compounds such as epoxidized 1,2-polybutadiene, epoxidized soybean oil, and tetraglycidyl-1,3-bisaminomethylcyclohexane; halides such as tin tetrachloride, tetrachlorosilane, trichlorosilane, trichloromethylsilane, dichlorodimethylsilane, and dibromodimethylsilane; ester compounds such as methyl benzoate, ethyl benzoate, phenyl benzoate, diethyl oxalate, diethyl malonate, diethyl adipate, dimethyl phthalate, and dimethyl terephthalate; carbonate ester compounds such as dimethyl carbonate, diethyl carbonate, and diphenyl carbonate; alkoxysilane compounds such as diethoxydimethylsilane, trimethoxymethylsilane, triethoxymethylsilane, tetramethoxysilane, tetraethoxysilane, tetrabutoxysilane, tetrakis(2-ethylhexyloxy)silane, bis(triethoxysilyl)ethane, and 3-aminopropyltriethoxysilane; and 2,4-tolylenediisocyanate.

<Hydrogenation Step>

The block copolymer (A) may be a hydrogenated block copolymer (A) obtained by subjecting the block copolymer obtained by the above-described method to a step of hydrogenation. A preferred embodiment of the block copolymer (A) is a hydrogenated block copolymer (A).

As the hydrogenation method, a known method can be used. For example, the hydrogenation reaction is carried out in the presence of a Ziegler-based catalyst; a metal catalyst of nickel, platinum, palladium, ruthenium or rhodium supported on carbon, silica, diatomaceous earth or the like; an organometallic complex having a metal of cobalt, nickel, palladium, rhodium or ruthenium; or the like as a hydrogenation catalyst in a solution prepared by dissolving the block copolymer (A) in a solvent having no influence on the hydrogenation reaction.

In the hydrogenation step, a hydrogenation catalyst may be added to the polymerization reaction liquid containing the block copolymer obtained by the method for producing the block copolymer (A) described above to perform a hydrogenation reaction. In the present invention, the hydrogenation catalyst is preferably palladium carbon in which palladium is supported on carbon.

In the hydrogenation reaction, the hydrogen pressure is preferably 0.1 to 20 MPa, the reaction temperature is preferably 100°C to 200°C, and the reaction time is preferably 1 to 20 hours.

The hydrogenation rate of carbon-carbon double bonds in the structural unit derived from a conjugated diene compound in the block copolymer (A) is preferably 70 mol% or more. From the viewpoint of heat resistance and weather resistance, the hydrogenation rate of carbon-carbon double bonds in the structural unit derived from a conjugated diene compound is more preferably 70 to 98 mol%, still more preferably 70 to 97 mol%, even more preferably 80 to 96 mol%, particularly preferably 85 to 96 mol%, and most preferably 87 to 96 mol%.

The hydrogenation rate can be calculated by measuring $^1$H-NMR of the block copolymer (A) before hydrogenation and the block copolymer (A) after hydrogenation.

The hydrogenation rate is a hydrogenation rate of carbon-carbon double bonds in all the structural units derived from a conjugated diene compound present in the block copolymer (A).

Examples of the carbon-carbon double bonds in the structural units derived from a conjugated diene compound present in the block copolymer (A) include carbon-carbon double bonds in the structural units derived from conjugated diene compounds in the polymer block (a2) and the polymer block (a3).

In the description herein, although the polymer block (a2) and the polymer block (a3) in the hydrogenated block copolymer (A) are hydrogenated, they are referred to as the "polymer block (a2)" and the "polymer block (a3)" in the same manner as before hydrogenation.

In the present embodiment, an unmodified block copolymer may be used, but a block copolymer modified as described below may also be used.

In the case of a modified block copolymer, the block copolymer may be modified after the hydrogenation step. Examples of a functional group that can be introduced by modification include an amino group, an alkoxysilyl group, a hydroxy group, an epoxy group, a carboxy group, a carbonyl group, a mercapto group, an isocyanate group, and an acid anhydride group.

Examples of the method for modifying the block copolymer include a method in which the hydrogenated block copolymer after isolation is grafted with a modifying agent such as maleic anhydride.

The block copolymer can also be modified before the hydrogenation step. Specific examples of the method include a method of adding a coupling agent such as tin tetrachloride, tetrachlorosilane, dichlorodimethylsilane, dimethyldiethoxysilane, tetramethoxysilane, tetraethoxysilane, 3-aminopropyltriethoxysilane, tetraglycidyl-1,3-bisaminomethylcyclohexane or 2,4-tolylenediisocyanate, a polymerization terminal modifying agent such as 4,4'-bis(diethylamino)benzophenone or N-vinylpyrrolidone, or other modifying agents described in JP 2011-132298 A, which can react with a polymerization active terminal, before adding a polymerization terminator.

The position at which the functional group is introduced may be a polymerization terminal or a side chain of the block copolymer. The functional group may be used alone or in combination of two or more thereof. The amount of the modifying agent is preferably in the range of 0.01 to 10 molar equivalents with respect to 1 mol of the anionic polymerization initiator.

(Peak Top Molecular Weight)

The peak top molecular weight (Mp) of the block copolymer (A) is preferably 4,000 to 1,000,000, more preferably 9,000 to 800,000, still more preferably 30,000 to 700,000, even more preferably 50,000 to 600,000, and particularly preferably 100,000 to 500,000, from the viewpoint of mechanical strength.

The molecular weight distribution (Mw/Mn) of the block copolymer (A) is preferably 1 to 6, more preferably 1 to 4, still more preferably 1 to 3, and even more preferably 1 to 2. When the molecular weight distribution is within the above range, the variation in viscosity of the block copolymer (A) is small, and handling is easy.

In the description herein, the peak top molecular weight (Mp) and the molecular weight distribution (Mw/Mn) are values measured by the methods described in Examples described later.

The peak top molecular weight of the polymer block (a1) is preferably 2,000 to 100,000, more preferably 4,000 to 80,000, still more preferably 5,000 to 70,000, and even more preferably 6,000 to 65,000, from the viewpoint of moldability.

[Block Copolymer (B)]

The resin composition of the present embodiment can suppress a decrease in physical properties at a low temperature, and can exhibit excellent moldability by containing the block copolymer (B).

The block copolymer (B) has a polymer block (b 1) containing a structural unit derived from an aromatic vinyl compound and a polymer block (b2) containing 30 mol% or more of a structural unit derived from isoprene. However, the block copolymer (B) does not have a polymer block containing a structural unit derived from farnesene. In addition, the block copolymer (A) is different from the block copolymer (B).

The block copolymer (B) may be used alone or in combination of two or more kinds thereof.

(Polymer Block (b 1))

The polymer block (b 1) contains a structural unit derived from an aromatic vinyl compound. Examples of the aromatic vinyl compound include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, and divinylbenzene. These aromatic vinyl compounds may be used alone or in combination of two or more kinds thereof. Among these, styrene, α-methylstyrene, and 4-methylstyrene are preferable, and styrene is more preferable.
The polymer block (b 1) may contain a structural unit derived from a monomer other than the aromatic vinyl compound.
Examples of the monomer other than the aromatic vinyl compound include at least one selected from the group consisting of butadiene, isoprene, 2,3-dimethylbutadiene, 1,3-pentadiene, 1,3-hexadiene, isobutylene, methyl methacrylate, methyl vinyl ether, β-pinene, 8,9-p-menthene, dipentene, methylene norbornene, and 2-methylene tetrahydrofuran.
From the viewpoint of mechanical properties, the content of the structural unit derived from an aromatic vinyl compound in the polymer block (b 1) is preferably 60% by mass or more, more preferably 70% by mass or more, still more preferably 80% by mass or more, even more preferably 90% by mass or more, and particularly preferably 100% by mass. The upper limit of the content of the structural unit derived from an aromatic vinyl compound in the polymer block (b 1) may be 100% by mass, may be 99% by mass, or may be 98% by mass.
The total content of the polymer block (b1) in the block copolymer (B) is preferably 1% to 65% by mass, preferably 5% to 60% by mass, more preferably 5% to 50% by mass, and still more preferably 10% to 40% by mass. In a case where the content is 1% by mass or more, excellent moldability is easily exhibited in the resin composition. In addition, in a case where the content is 65% by mass or less, it can be expected that tear strength, tensile properties, and the like are exhibited while sufficient flexibility is provided.

(Polymer Block (b2))

The polymer block (b2) contains 30 mol% or more of a structural unit derived from isoprene. In a case where the content of the structural unit derived from isoprene in the polymer block (b2) is less than 30 mol%, it becomes difficult to suppress a decrease in physical properties at a low temperature and to exhibit excellent moldability. The content of the structural unit derived from isoprene in the polymer block (b2) is preferably 40 mol% or more, more preferably 45 mol% or more, still more preferably 50 mol% or more, and may be 100 mol%. The upper limit of the content of the structual unit derived from isoprene may be 100 mol%, may be 99 mol%, or may be 98 mol%.
The polymer block (b2) may contain a structural unit derived from a conjugated diene compound other than isoprene, in addition to the structural unit derived from isoprene.
Examples of the conjugated diene compound other than isoprene include at least one selected from the group consisting of butadiene, hexadiene, 2,3-dimethyl-1,3-butadiene, 2-phenyl-1,3-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, and chloroprene. Among these, butadiene is preferable.
When butadiene and isoprene are used in combination, the blending ratio [isoprene/butadiene] (mass ratio) is not particularly limited, but is preferably 35/65 to 95/5, more preferably 40/60 to 90/10, still more preferably 40/60 to 70/30, and particularly preferably 45/55 to 65/35. The mixing ratio [isoprene/butadiene] is preferably 30/70 to 95/5, more preferably 35/90 to 90/10, still more preferably 40/60 to 70/30, particularly preferably 45/55 to 55/45, in terms of molar ratio.
When the structural unit constituting the polymer block (b2) is any one of an isoprene unit and a mixture unit of isoprene and butadiene, the bonding form of each of isoprene and butadiene may be a 1,2-bond or a 1,4-bond in the case of butadiene, and may be a 1,2-bond, a 3,4-bond or a 1,4-bond in the case of isoprene.
In the block copolymer (B), the total content of the 3,4-bond unit and the 1,2-bond unit in the polymer block (b2) (hereinafter, sometimes simply referred to as "vinyl bond amount") is preferably 1 to 35 mol%, more preferably 1 to 30 mol%, still more preferably 1 to 25 mol%, and even more preferably 1 to 20 mol%, and may be 1 to 15 mol% or may be 1 to 10 mol%. When the content is within the above range, the decrease in physical properties at a low temperature is suitably suppressed.
Here, the vinyl bond amount is a value calculated by $^1$H-NMR measurement according to the method described in Examples.
In addition, the polymer block (b2) may further contain a structural unit other than the structural unit derived from isoprene and the structural unit derived from a conjugated diene compound other than isoprene.
The total content of the structural unit derived from isoprene and the structural unit derived from a conjugated

diene compound other than isoprene in the polymer block (b2) is preferably 60% by mass or more, more preferably 80% by mass or more, and still more preferably 100% by mass.

(Bonding Form)

The block copolymer (B) is a block copolymer having at least one polymer block (b1) and at least one polymer block (b2).

The bonding form of the polymer block (b1) and the polymer block (b2) is not particularly limited, and may be linear, branched, radial, or a combination of two or more thereof. Among these, a form in which each block is linearly bonded is preferable.

Examples of the linear bonding form include a bonding form represented by $(A-B)_l$, $A-(B-A)_m$, or $B-(A-B)_n$ when the polymer block (b1) is represented by A and the polymer block (b2) is represented by B. Note that 1, m, and n each independently represent an integer of 1 or more.

In a case where the block copolymer (B) has at least one polymer block (b 1) and at least one polymer block (b2), the block copolymer (B) is preferably a triblock copolymer represented by A-B-A in a bonding form having blocks in the order of the polymer block (b 1), the polymer block (b2), and the polymer block (b 1).

That is, the block copolymer (B) is preferably a triblock copolymer represented by A-B-A, and the triblock copolymer may be an unhydrogenated product or may be a hydrogenated product. When the resin composition of the present invention is used for an application in which heat resistance is particularly important, the triblock copolymer is preferably a hydrogenated product.

The two or more polymer blocks (b 1) in the block copolymer (B) may be polymer blocks composed of the same structural unit or may be polymer blocks composed of different structural units. Similarly, in a case where the block copolymer (B) has two or more polymer blocks (b2), each of the polymer blocks may be polymer blocks composed of the same structural unit or may be polymer blocks composed of different structural units. For example, in the two polymer blocks (b 1) in the triblock copolymer represented by A-B-A, the respective aromatic vinyl compounds may be the same or different.

In the block copolymer (B), the mass ratio [(b1)/(b2)] of the polymer block (b 1) to the polymer block (b2) is preferably 1/99 to 65/35, more preferably 5/95 to 60/40, still more preferably 5/95 to 50/50, even more preferably 10/90 to 40/60, and particularly preferably 15/85 to 35/65. When the content is within the above range, the decrease in physical properties at a low temperature is suitably suppressed.

The block copolymer (B) may have a polymer block composed of other monomers, in addition to the polymer block (b 1) and the polymer block (b2), as long as the effects of the present invention are not impaired.

On the other hand, from the viewpoint of better exhibiting the effects of the present invention, the total content of the polymer block (b 1) and the polymer block (b2) in the block copolymer (B) is preferably 80% by mass or more, more preferably 90% by mass or more, still more preferably 95% by mass or more, and even more preferably 100% by mass. One embodiment of the block copolymer (B) includes, for example, a block copolymer composed of at least one polymer block (b 1) and at least one polymer block (b2).

(Method for Producing Block Copolymer (B))

The block copolymer (B) can be produced by the same production method as the production method of the block copolymer (A) described above, and suitable aspects thereof are also the same.

For example, the block copolymer (B) can be suitably produced by a step of polymerizing the polymer block (b 1) and the polymer block (b2) by anionic polymerization. Further, when the block copolymer (B) is a hydrogenated block copolymer, it can be suitably produced by a step of hydrogenating a carbon-carbon double bond in a structural unit derived from a conjugated diene compound in the block copolymer (B).

A preferred embodiment of the block copolymer (B) is a hydrogenated block copolymer (B).

The hydrogenation rate of carbon-carbon double bonds in the structural unit derived from a conjugated diene compound in the block copolymer (B) is preferably 70 mol% or more. From the viewpoint of heat resistance and weather resistance, the hydrogenation rate of carbon-carbon double bonds in the structural unit derived from a conjugated diene compound is more preferably 70 to 99.5 mol%, still more preferably 75 to 99.5 mol%, even more preferably 80 to 99.5 mol%, particularly preferably 85 to 99.5 mol%, and most preferably 87 to 99.5 mol%.

The hydrogenation rate can be calculated by measuring $^1$H-NMR of the block copolymer (B) before hydrogenation and the block copolymer (B) after hydrogenation.

The hydrogenation rate is a hydrogenation rate of carbon-carbon double bonds in all the structural units derived from a conjugated diene compound present in the block copolymer (B).

Examples of the carbon-carbon double bonds in the structural unit derived from a conjugated diene compound present in the block copolymer (B) include carbon-carbon double bonds in the structural unit derived from a conjugated

diene compound in the polymer block (b2).

In the description herein, although the polymer block (b2) in the hydrogenated block copolymer (B) is hydrogenated, it is referred to as the "polymer block (b2)" in the same manner as before hydrogenation.

Preferred embodiments of the hydrogenated block copolymer (B) include SEPS (styrene-ethylene-propylene-styrene block copolymer), which is a hydrogenated product of a styrene-isoprene-styrene triblock copolymer (SIS), and SEEPS (styrene-ethylene-ethylene-propylene-styrene block copolymer), which is a hydrogenated product of a styrene-isoprene/butadiene-styrene triblock copolymer (SIBS).

(Peak Top Molecular Weight)

The peak top molecular weight (Mp) of the block copolymer (B) is preferably 4,000 to 1,000,000, more preferably 9,000 to 800,000, still more preferably 30,000 to 700,000, even more preferably 50,000 to 600,000, and particularly preferably 75,000 to 500,000, and may be 100,000 to 500,000, from the viewpoint of moldability.

The molecular weight distribution (Mw/Mn) of the block copolymer (B) is preferably 1 to 6, more preferably 1 to 4, still more preferably 1 to 3, and even more preferably 1 to 2. When the molecular weight distribution is within the above range, the variation in viscosity of the block copolymer (B) is small, and handling is easy.

The peak top molecular weight of the polymer block (b 1) is preferably 2,000 to 100,000, more preferably 4,000 to 80,000, still more preferably 5,000 to 70,000, and even more preferably 5,000 to 50,000, from the viewpoint of moldability.

[Plasticizer (C)]

The resin composition of the present embodiment contains a plasticizer (C) from the viewpoint of moldability and fluidity.

Examples of the plasticizer (C) include oil-based softeners such as paraffinic, naphthenic, and aromatic process oils, mineral oil, and white oil; phthalic acid derivatives such as dioctyl phthalate and dibutyl phthalate; liquid co-oligomers of ethylene and $\alpha$-olefm; liquid paraffin; polybutene; low molecular weight polyisobutylene; liquid polydienes such as liquid polybutadiene, liquid polyisoprene, liquid polyisoprene/butadiene copolymer, liquid styrene/butadiene copolymer, and liquid styrene/isoprene copolymer; and hydrogenated products or modified products thereof. The plasticizer (C) may be used alone or in combination of two or more kinds thereof.

Among the above plasticizers, from the viewpoint of compatibility with the block copolymer (A) and the block copolymer (B), preferred are paraffinic and naphthenic process oils; liquid co-oligomers of ethylene and $\alpha$-olefin; liquid paraffins; and low molecular weight polyisobutylenes; more preferred are paraffinic and naphthenic process oils; and still more preferred are paraffinic process oils.

[Polyolefin-based Resin (D)]

The resin composition of the present embodiment contains a biomass-derived polyolefin-based resin (D) from the viewpoint of reducing environmental load.

By using the polyolefin-based resin (D) together with the above-described block copolymer (A) containing the structural unit derived from the bio-derived farnesene, the dependence on petroleum can be effectively reduced. From such a viewpoint, the polyolefin-based resin (D) is preferably a biomass-derived polyethylene-based resin or polypropylene-based resin, more preferably a biomass-derived polyethylene-based resin, and still more preferably a biomass-derived low-density polyethylene (LDPE).

These polyolefin-based resins (D) may be used alone or in combination of two or more kinds thereof.

The biobased content of the polyolefin-based resin (D) is preferably 70% by mass or more, more preferably 80% by mass or more, and still more preferably 90% by mass ore more.

The melt flow rate of the polyolefin-based resin (D) under the conditions of a temperature of 190°C and a load of 21 N is preferably 0.1 to 100 (g/10 min), more preferably 0.5 to 70 (g/10 min), still more preferably 1 to 50 (g/10 min), even more preferably 1.5 to 40 (g/10 min), particularly preferably 2 to 35 (g/10 min), and most preferably 5 to 35 (g/10 min), from the viewpoint of compatibility with the block copolymer (A) and the block copolymer (B), moldability, and fluidity.

[Polyolefin-based Resin (E)]

The resin composition of the present embodiment may contain a polyolefin-based resin (E) other than the biomass-derived polyolefin-based resin (D).

The polyolefin-based resin (E) is not particularly limited, and a conventionally known olefin-based polymer can be used. Examples of the polyolefin-based resin (E) include homopolymers of olefins such as ethylene, propylene, 1-butene, 1-pentene, 1-hexene, 1-heptene, 1-octene, 1-nonene, 1-decene, 3-methyl-1-butene, and 4-methyl-1-pentene; ethylene-α-olefin copolymers which are copolymers of ethylene and α-olefins having 3 to 20 carbon atoms such as propylene, 1-butene, 1-pentene, 4-methyl-1-pentene, 1-hexene, 1-heptene, 1-octene, 1-hexene, 1-heptene, 6-methyl-1-heptene, isooctene, isooctadiene, and decadiene; an ethylene-propylene-diene copolymer (EPDM); an ethylene-vinyl acetate copolymer; ethylene-unsaturated carboxylic acid copolymers such as an ethylene-acrylic acid copolymer and an ethylene-methacrylic acid copolymer; and polyolefin-based elastomers containing polyolefins such as polypropylene and polyethylene as a hard segment and an ethylene-propylene copolymer rubber (EPM) and an ethylene-propylene-diene copolymer rubber EPDM) as a soft segment. These polyolefin-based resins (E) may be used alone or in combination of two or more kinds thereof.

Among these polyolefin-based resins (E), polypropylene is preferable from the viewpoint of compatibility with the block copolymer (A) and the block copolymer (B), mechanical strength, and the like. Specifically, at least one selected from the group consisting of homopolypropylene, block polypropylene, and random polypropylene is preferable.

In a case where the polyolefin-based resin (E) is polypropylene, the melt flow rate of polypropylene under the conditions of a temperature of 230°C and a load of 21 N is preferably 0.1 to 100 (g/10 min), more preferably 0.5 to 80 (g/10 min), still more preferably 1 to 70 (g/10 min), and even more preferably 10 to 60 (g/10 min), from the viewpoint of compatibility with the block copolymer (A) and the block copolymer (B), moldability, and fluidity.

[Content]

In one preferred embodiment, the resin composition of the present embodiment contains the block copolymer (A) and the block copolymer (B) at a mass ratio [(A)/(B)] of 99/1 to 1/99, and contains 1 to 350 parts by mass of the plasticizer (C) and 1 to 200 parts by mass of the biomass-derived polyolefin-based resin (D) with respect to 100 parts by mass of the total content of the block copolymer (A) and the block copolymer (B).

The mass ratio [(A)/(B)] of the block copolymer (A) to the block copolymer (B) is preferably 99/1 to 1/99, more preferably 95/5 to 20/80, still more preferably 95/5 to 30/70, even more preferably 90/10 to 40/60, particularly preferably 90/10 to 50/50, and most preferably 85/15 to 55/45. When the mass ratio falls within the above range, it is possible to obtain a resin composition capable of giving a molded body which is further excellent in suppression of decrease in physical properties at a low temperature and moldability while reducing environmental load.

Further, the content of the plasticizer (C) is preferably 1 to 350 parts by mass, more preferably 5 to 300 parts by mass, still more preferably 10 to 200 parts by mass, and even more preferably 20 to 100 parts by mass, with respect to 100 parts by mass of the total content of the block copolymer (A) and the block copolymer (B).

Furthermore, the content of the biomass-derived polyolefin-based resin (D) is preferably 1 to 200 parts by mass, more preferably 5 to 150 parts by mass, still more preferably 10 to 100 parts by mass, and even more preferably 20 to 90 parts by mass, with respect to 100 parts by mass of the total content of the block copolymer (A) and the block copolymer (B). When the content of the biomass-derived polyolefin-based resin (D) is within the above numerical range, the biobased content can be increased, and suppression of decrease in physical properties at a low temperature and excellent moldability are more easily achieved.

In addition, in a case where the resin composition of the present embodiment contains the polyolefin-based resin (E) other than the biomass-derived polyolefin-based resin (D), the content of the polyolefin-based resin (E) is preferably 1 to 100 parts by mass, more preferably 1 to 50 parts by mass, still more preferably 1 to 45 parts by mass, and even more preferably 5 to 25 parts by mass, with respect to 100 parts by mass of the total content of the block copolymer (A) and the block copolymer (B).

In addition, as one of the preferred present embodiments, an embodiment can be included in which the resin composition contains the block copolymer (A) and the block copolymer (B) at a mass ratio [(A)/(B)] of preferably 99/1 to 65/35, more preferably 90/10 to 70/30, and contains preferably 10 to 60 parts by mass, more preferably 20 to 45 parts by mass of the plasticizer (C), preferably 5 to 50 parts by mass, preferably 10 to 40 parts by mass of the biomass-derived polyolefin-based resin (D), and preferably 1 to 45 parts by mass, more preferably 5 to 25 parts by mass of the polyolefin-based resin (E) other than the biomass-derived polyolefin-based resin (D), with respect to 100 parts by mass of the total content of the block copolymer (A) and the block copolymer (B).

In addition, as one of the preferred present embodiments, an embodiment can be included in which the resin composition contains the block copolymer (A) and the block copolymer (B) at a mass ratio [(A)/(B)] of 70/30 to 50/50, more preferably 65/35 to 55/45, and contains 50 to 150 parts by mass, more preferably 60 to 100 parts by mass of the plasticizer (C), 50 to 150 parts by mass, preferably 70 to 90 parts by mass of the biomass-derived polyolefin-based resin (D), and preferably 1 to 45 parts by mass, more preferably 5 to 25 parts by mass of the polyolefin-based resin (E) other than the biomass-derived polyolefin-based resin (D), with respect to 100 parts by mass of the total content of the block copolymer (A) and the block copolymer (B).

The total content of the above-mentioned (A) to (E) in the resin composition of the present embodiment is not particularly limited as long as the effects of the present invention can be obtained. On the other hand, in an embodiment

in which a reduction in environmental load is particularly important, the total content of the above-mentioned (A) to (E) in the resin composition of the present embodiment is preferably 85% to 100% by mass, more preferably 90% to 100% by mass, and still more preferably 95% to 100% by mass.

[Additives]

In the resin composition of the present embodiment, additives and inorganic fillers other than those described above can be added as long as the effects of the present invention are not impaired.
Examples of other additives include a heat aging inhibitor, an antioxidant, a light stabilizer, an antistatic agent, a release agent, a flame retardant, a foaming agent, a pigment, a dye, and a whitening agent. These additives may be used alone or in combination of two or more kinds thereof.
The content of the other additives in the resin composition is preferably 15% by mass or less, more preferably 5% by mass or less, and still more preferably 1% by mass or less. The content of other additives in the resin composition can be, for example, 0.01% by mass or more.
Specific examples of the inorganic filler include talc, calcium carbonate, silica, glass fiber, carbon fiber, mica, kaolin, and titanium oxide. Among these, talc, calcium carbonate, and silica are preferable, and calcium carbonate and silica are particularly preferable. The content of the inorganic filler is not particularly limited, however, from the viewpoint of a balance between mechanical properties and reduction in environmental load, the content is preferably 70% by mass or less, more preferably 50% by mass or less, still more preferably 30% by mass or less, and most preferably 25% by mass or less in the resin composition. The content of the inorganic filler in the resin composition can be, for example, 0.01% by mass or more.
In addition, in the present embodiment, the content of a polyester elastomer containing a biomass-derived structural unit in the resin composition is preferably 5% by mass or less, more preferably 1% by mass or less, and still more preferably 0% by mass. It is one of preferred embodiments that the resin composition of the present embodiment does not contain the polyester elastomer containing a biomass-derived structural unit, from the viewpoint of more easily suppressing a decrease in physical properties at a low temperature and obtaining more excellent moldability.

[Method for Producing Resin Composition]

The method for producing the resin composition of the present embodiment is not particularly limited, and examples thereof include a method in which the above-mentioned (A) to (D), and if necessary, the above-mentioned (E), and further other additives and an inorganic filler are pre-blended and collectively mixed, and then melt-kneaded. The melt-kneading can be performed using a single-screw extruder, a multi-screw extruder, a Banbury mixer, a heating roll, various kneaders, or the like. In addition, examples of the melt-kneading include a method in which the above-mentioned (A) to (D), and if necessary, the above-mentioned (E), and further other additives and an inorganic filler are supplied from separate charging ports and melt-kneaded.
In addition, examples of the preblending method include a method in which a mixer such as a Henschel mixer, a high-speed mixer, a V blender, a ribbon blender, a tumbler blender, or a conical blender is used. The temperature at the time of melt-kneading can be freely selected within a range of preferably 150°C to 300°C.

[Biobased Content]

The biobased content of the resin composition of the present embodiment is 37% by mass or more, preferably 40% by mass or more, and may be 44% by mass or more, or may be 46% by mass or more. The upper limit of the biobased content may be, for example, 98% by mass. The biobased content is an indicator of the degree of dependence on oil of the resin composition, and when the biobased content is within the above range, the degree of dependence on oil can be reduced.
The biobased content (% by mass) is calculated from the mass ratio of the block copolymer (A) and the polyolefin-based resin (D) and the biobased content of each of the components by the following formula.

$$\text{Biobased content (\% by mass)} = (\text{MA} \times \text{XA}/100) + (\text{MD} \times \text{XD}/100)$$

In the above formula, MA represents the mass ratio (% by mass) of the block copolymer (A) to the total mass of the resin composition, and MD represents the mass ratio (% by mass) of the polyolefin-based resin (D) to the total mass of the resin composition. XA (% by mass) represents the biobased content of the block copolymer (A), and XD (% by mass) represents the biobased content of the polyolefin-based resin (D).

[Surface Roughness]

As one preferred embodiment of the resin composition of the present embodiment, the standard deviation of six points of the maximum height roughness Rz measured in accordance with JIS B 0601-2001 when the resin composition is emboss processed by injection molding is preferably 12 or less.
The maximum height roughness Rz is the sum of the maximum value of the profile peak height and the maximum value of the profile valley depth at a sampling length in the mean line direction of the roughness profile.
In the description herein, a sheet obtained by emboss processing the resin composition by injection molding is prepared as a sample, and the maximum height roughness Rz of the sample is measured at six positions (Fig. 1) in accordance with JIS B 0601-2001 to calculate the standard deviation. The smaller the standard deviation, the more uniformly the emboss is transferred.
When the standard deviation is 12 or less, the emboss is uniformly transferred, and the moldability is excellent. Various conditions can be considered for satisfying the standard deviation of 12 or less, but it is important that the resin composition of the present embodiment contains the block copolymer (B). By containing the block copolymer (B) in the resin composition, tan $\delta$, which will be described later, tends to be high near the injection molding temperature, and as a result, it is considered that the emboss can be uniformly transferred. In the resin composition of the present embodiment, the standard deviation can be set to 10 or less.
In the description herein, the maximum height roughness Rz is a value measured by a method described in Examples described later.

[Hardness]

The resin composition of the present embodiment is less likely to decrease in physical properties even at a low temperature. Therefore, for the resin composition of the present embodiment, good hardness can be maintained even at a low temperature.
As one preferred embodiment of the resin composition of the present embodiment, it is preferable to satisfy the following formula (1).

$$[(-16°\text{C hardness}/23°\text{C hardness}) \times 100 \leq 120] \qquad (1)$$

In the above formula (1), the "23°C hardness" represents a hardness measured at an atmospheric temperature of 23°C according to a type A durometer method of JIS K 6253-2:2012.
In addition, the "-16°C hardness" represents a hardness measured at an atmospheric temperature of -16°C according to a type A durometer method of JIS K 6253-2:2012.
Various conditions can be considered for satisfying the above formula (1), but it is important that the resin composition of the present embodiment contains the block copolymer (B).
More specifically, the hardness is a value measured by a method described in Examples described later.

<Molded Body>

The molded body of the present invention is obtained by using the resin composition of the present invention.
The shape of the molded body may be any shape as long as it can be produced by using the resin composition of the present invention. For example, the molded body can be formed into various shapes such as a pellet, a film, a sheet, a plate, a pipe, a tube, a rod-like body, and a granular body. The method for producing the molded body is not particularly limited, and the molded body can be molded by various conventional molding methods, for example, injection molding, blow molding, press molding, extrusion molding, calender molding, etc.
Since the resin composition of the present embodiment has excellent moldability, an injection molded body or an extrusion molded body is suitable, and in particular, an injection molded body subjected to emboss processing by injection molding can be obtained with good design property.

<Applications>

It can be expected that the resin composition of the present invention has a reduced environmental load and is excellent in moldability, and that the molded body is less likely to be deteriorated in physical properties even at a low temperature and is excellent in all of flexibility, weather resistance, and rubber elasticity. Therefore, the resin composition and the molded body of the present invention can be suitably used as a molded article such as a sheet, a film, a tube, a hose, or a belt. Specifically, the resin composition can be suitably used for various vibration-proof and damping members

such as: vibration-proof rubbers, mats, sheets, cushions, dampers, pads, and mount rubbers; footwear such as sports shoes and fashion sandals; household electrical appliance members such as televisions, stereos, vacuum cleaners, and refrigerators; building materials such as doors of buildings and sealing packings for window frames; automobile interior and exterior parts such as bumper parts, body panels, weather strips, grommets, skin materials of instrument panels or the like, and airbag covers; grips for equipment used in sports and fitness such as drivers, golf clubs, tennis rackets, ski poles, bicycles, motorcycles, fishing equipment, and water sports; grips for tools and electric tools such as hammers, screwdrivers, pliers, and wrenches; grips for water section goods such as kitchen utensils, toothbrushes, interdental brushes, shavers, and bathtub handrails; grips for writing utensils such as pens and scissors; grips used for automobile interiors and exteriors such as shift levers and assist knobs; grips for bags; non-slip mats such as glove non-slip mats and kitchen mats; toys; and tires such as automobile tires, bicycle tires, and motorcycle tires.

It can also be suitably used for packaging materials for foods such as wrapping films for foods; medical tools such as infusion bags, syringes, and catheters; container plugs and cap liners for storing foods, beverages, medicines, and the like.

## Examples

Hereinafter, the present invention will be specifically described by Examples and Comparative Examples, but the present invention is not limited thereto. Meanwhile, β-farnesene (purity: 97.6% by mass, biobased concentration (ASTM D6866-16): 99%, manufactured by Amiris, Inc.) was purified with molecular sieves of 3 Å and distilled under a nitrogen atmosphere to remove hydrocarbon-based impurities such as zingiberene, bisabolene, farnesene epoxides, farnesol isomers, E,E-farnesol, squalene, ergosterol, and several kinds of dimers of farnesene, and then used for the following polymerization.

Each component used in Examples and Comparative Examples is as follows.

<Block Copolymer (A)>

Block copolymers (A-1) to (A-3) of Production Examples 1, 7, and 8 described later

<Block Copolymer (B)>

Block copolymers (B-1) to (B-5) of Production Examples 2 to 6 described later

<Block Copolymer (B')>

Block copolymer (B'-1):
SEBS, styrene-ethylene-butylene-styrene block copolymer, vinyl bond amount: 37 mol% (product name: G1654, manufactured by Kraton Polymers)
Block copolymer (B'-2):
SEBS, styrene-ethylene-butylene-styrene block copolymer (product name: G1642, vinyl bond amount: 73 mol%, manufactured by Kraton Polymers)
Block copolymer (B'-3):
SEBS, styrene-ethylene-butylene-styrene block copolymer (product name: G1651, vinyl bond amount: 37 mol%, manufactured by Kraton Polymers)

<Plasticizer (C)>

Paraffinic process oil (product name: Diana Process Oil PW-90, manufactured by Idemitsu Kosan Co., Ltd.)

<Polyolefin-based Resin (D)>

Polyethylene: Bio LDPE Polyethylene (product name: SPB608, manufactured by Braskem Company, melt flow rate: 30 g/10 min (190°C, 21 N), biobased content (ASTM D6866-16): 95% by mass)

<Polyolefin-based Resin (E)>

Polypropylene (E-1): homopolypropylene (product name: J107G, manufactured by Prime Polymer Co., Ltd., MFR: 30 g/10 min (230°C, 21 N))
Polypropylene (E-2): block polypropylene (product name: J707, manufactured by Prime Polymer Co., Ltd., MFR: 30 g/10 min (230°C, 21 N))

<Antioxidant>

Hindered phenol-based antioxidant (product name: Adekastab AO-60, manufactured by ADEKA Corporation)

The details of each measurement method for the block copolymer (A) and the block copolymer (B) obtained in Production Examples are as follows.

(1) Measurement of Molecular Weight Distribution, Peak Top Molecular Weight (Mp), etc.

For the peak top molecular weight (Mp) and the molecular weight distribution (Mw/Mn) of the block copolymer (A), the block copolymer (B) and the styrene block, the molecular weight in terms of standard polystyrene was determined by gel permeation chromatography (GPC), and the peak top molecular weight (Mp) was determined from the position of the top of the peak of the molecular weight distribution. The measurement apparatus and conditions are as follows.

· Apparatus: GPC apparatus "HLC-8320GPC" manufactured by Tosoh Corporation
· Separation column: column "TSKgelSuperHZ4000" manufactured by Tosoh Corporation
· Eluent: tetrahydrofuran
· Eluent flow rate: 0.7 mL/min
· Sample concentration: 5 mg/10 mL
· Column temperature: 40°C

(2) Method for Measuring Hydrogenation Rate

The block copolymer (A) and the block copolymer (B) before hydrogenation and the block copolymer (A) and the block copolymer (B) after hydrogenation were each dissolved in $CDCl_3$, and $^1$H-NMR measurement [apparatus: "ADVANCE 400 Nano bay" (manufactured by Bruker), measurement temperature: 30°C] was performed. The hydrogenation rate of carbon-carbon double bonds in the structural unit derived from a conjugated diene compound in the block copolymer (A) and the block copolymer (B) before hydrogenation was calculated by the following formula from the peak of the proton of the carbon-carbon double bond appearing at 4.5 to 6.0 ppm in the obtained spectrum.
Hydrogenation rate (mol%) = {1 - (number of moles of carbon-carbon double bonds contained per mole of block copolymer (A) or block copolymer (B) after hydrogenation)/(number of moles of carbon-carbon double bonds contained per mole of block copolymer (A) or block copolymer (B) before hydrogenation)} × 100

(3) Vinyl Bond Amount of Block Copolymer (A) and Block Copolymer (B)

In addition, the details of the method for measuring the vinyl bond amount of the block copolymer (A) and the block copolymer (B) obtained in Production Examples are as follows.
The block copolymer (A) and the block copolymer (B) before hydrogenation were each dissolved in $CDCl_3$, and $^1$H-NMR measurement [apparatus: "ADVANCE 400 Nano bay" (manufactured by Bruker), measurement temperature: 30°C] was performed.
Regarding the block copolymer (A), the vinyl bond amount was calculated from the ratio of the peak areas corresponding to the 1,2-bond and the 3,13-bond in the β-farnesene structural unit with respect to the total peak area of the structural unit derived from β-farnesene (Production Examples 1 and 7). In addition, the vinyl bond amount in Production Example 8 is the total of the vinyl bond amounts in the polymer block (a2) and the polymer block (a3) obtained from the peak areas corresponding to the 1,2-bond and the 3,13-bond in the β-farnesene structural unit and the peak area corresponding to the 1,2-bond unit in the butadiene structural unit with respect to the total peak area of the structural unit derived from β-farnesene (polymer block (a2)) and the structural unit derived from butadiene (polymer block (a3)).
Regarding the block copolymer (B), the vinyl bond amount was calculated from the ratio of the peak areas corresponding to the 3,4-bond unit and the 1,2-bond unit in the isoprene structural unit and the 1,2-bond unit in the butadiene structural unit with respect to the total peak area of the structural unit derived from isoprene (Production Examples 3 and 5), or the structural unit derived from butadiene and isoprene (Production Examples 2, 4, and 6).

<Block Copolymer (A)>

[Production Example 1]

Block Copolymer (A-1)

50.0 kg of cyclohexane as a solvent and 0.0155 kg of sec-butyllithium (10.5% by mass cyclohexane solution) as an anionic polymerization initiator were charged into a nitrogen-purged and dried pressure-resistant container, the temperature was raised to 50°C, 1.32 kg of styrene (1) was added thereto and polymerization was performed for 1 hour, then 6.18 kg of β-farnesene was added thereto and polymerization was performed for 2 hours, and 1.32 kg of styrene (2) was further added thereto and polymerization was performed for 1 hour, thereby obtaining a reaction liquid containing a polystyrene-poly(β-farnesene)-polystyrene triblock copolymer.

5% by mass of palladium carbon (amount of supported palladium: 5% by mass) as a hydrogenation catalyst with respect to the block copolymer was added to the reaction liquid, and the reaction was carried out under the conditions of a hydrogen pressure of 2 MPa and 150°C for 10 hours. After cooling and pressure release, the hydrogenation catalyst was removed by filtration, and the filtrate was concentrated and further dried under vacuum to obtain a hydrogenated product of a polystyrene-poly(β-farnesene)-polystyrene triblock copolymer (block copolymer (A-1)).

The biobased content of the obtained block copolymer (A-1) measured in accordance with ASTM D6866-16 was 68% by mass.

In addition, the above-described physical properties of the block copolymer (A-1) were measured. The results are shown in Table 1.

<Block Copolymer (B)>

[Production Example 2]

Block Copolymer (B-1)

50.0 kg of cyclohexane as a solvent and 0.0531 kg of sec-butyllithium (10.5% by mass cyclohexane solution) as an anionic polymerization initiator were charged into a nitrogen-purged and dried pressure-resistant container, the temperature was raised to 50°C, 1.41 kg of styrene (1) was added thereto and polymerization was performed for 1 hour, a liquid mixture of 3.34 kg of isoprene and 2.66 kg of butadiene was added thereto and polymerization was performed for 2 hours, and 1.41 kg of styrene (2) was further added thereto and polymerization was performed for 1 hour, thereby obtaining a reaction liquid containing a polystyrene-poly(isoprene/butadiene)-polystyrene triblock copolymer.

5% by mass of palladium carbon (amount of supported palladium: 5% by mass) as a hydrogenation catalyst with respect to the block copolymer was added to the reaction liquid, and the reaction was carried out under the conditions of a hydrogen pressure of 2 MPa and 150°C for 10 hours. After cooling and pressure release, the hydrogenation catalyst was removed by filtration, and the filtrate was concentrated and further dried under vacuum to obtain a hydrogenated product of a polystyrene-poly(isoprene/butadiene)-polystyrene triblock copolymer (block copolymer (B-1)).

In addition, the above-described physical properties of the block copolymer (B-1) were measured. The results are shown in Table 1.

[Production Examples 3 to 6]

Block Copolymers (B-2) to (B-5)

Block copolymers (B-2) to (B-5) were produced by the same procedure as in Production Example 2 except that the raw materials and the amounts thereof used were changed as shown in Table 1.

The above physical properties of the obtained block copolymers (B-2) to (B-5) were measured. The results are shown in Table 1.

<Block Copolymer (A)>

[Production Example 7]

Block Copolymer (A-2)

A block copolymer (A-2) was produced by the same procedure as in Production Example 1 except that the raw

materials and the amounts thereof used were changed as shown in Table 1.

The biobased content of the obtained block copolymer (A-2) measured in accordance with ASTM D6866-16 was 80% by mass.

In addition, the above-described physical properties of the block copolymer (A-2) were measured. The results are shown in Table 1.

[Production Example 8]

Block Copolymer (A-3)

50.0 kg of cyclohexane as a solvent, 0.1905 kg of sec-butyllithium (10.5% by mass cyclohexane solution) as an anionic polymerization initiator, and 0.4007 kg of tetrahydrofuran as a Lewis base were charged into a nitrogen-purged and dried pressure-resistant container, the temperature was raised to 50°C, 6.34 kg of β-farnesene was added thereto, polymerization was performed for 2 hours, then 2.50 kg of styrene was added thereto, polymerization was performed for 1 hour, and 3.66 kg of butadiene was further added thereto, polymerization was performed for 1 hour. Subsequently, 0.0202 kg of dichlorodimethylsilane as a coupling agent was added to this polymerization reaction liquid, and the mixture was reacted for 1 hour to obtain a reaction liquid containing a poly(β-farnesene)-polystyrene-polybutadiene-polystyrene-poly(β-farnesene) pentablock copolymer.

5% by mass of palladium carbon (amount of supported palladium: 5% by mass) as a hydrogenation catalyst with respect to the block copolymer was added to this reaction liquid, and the reaction was carried out under the conditions of a hydrogen pressure of 2 MPa and 150°C for 10 hours. After cooling and pressure release, the palladium carbon was removed by filtration, and the filtrate was concentrated and further dried under vacuum to obtain a hydrogenated product of a poly(β-farnesene)-polystyrene-polybutadiene-polystyrene-poly(β-farnesene) pentablock copolymer (block copolymer (A-3)).

The biobased content of the obtained block copolymer (A-3) measured in accordance with ASTM D6866-16 was 48% by mass.

In addition, the above-described physical properties of the block copolymer (A-3) were measured. The results are shown in Table 1.

Table 1

| | | | Production Example 1 | Production Example 2 | Production Example 3 | Production Example 4 | Production Example 5 | Production Example 6 | Production Example 7 | Production Example 8 |
|---|---|---|---|---|---|---|---|---|---|---|
| | | | (A-1) | (B-1) | (B-2) | (B-3) | (B-4) | (B-5) | (A-2) | (A-3) |
| Amount used (kg) | Cyclohexane | | 50.0 | 50.0 | 50.0 | 50.0 | 50.0 | 50.0 | 50.0 | 50.0 |
| | sec-Butyllithium (10.5% by mass cyclohexane solution) | | 0.0155 | 0.0531 | 0.0285 | 0.0858 | 0.0880 | 0.0310 | 0.0413 | 0.1905 |
| | Polymer block (a1) or (b1) | Styrene (1) | 1.32 | 1.41 | 1.54 | 0.88 | 0.79 | 1.32 | 1.12 | 2.50 |
| | | Styrene (2) | 1.32 | 1.41 | 1.54 | 0.88 | 0.79 | 1.32 | 1.12 | |
| | Polymer block (a2) | β-farnesene | 6.18 | | | | | | 10.25 | 6.34 |
| | Polymer block (b2) | Butadiene | | 2.66 | | 3.12 | | 2.73 | | |
| | | Isoprene | | 3.34 | 5.74 | 3.94 | 7.24 | 3.44 | | |
| | Polymer block (a3) | Butadiene | | | | | | | | 3.66 |
| | Tetrahydrofuran | | | | | | | | | 0.4007 |
| | Dichloromethylsilane | | | | | | | | | 0.0202 |
| [(a1)/(a2) + (a3)] or [(b1)/(b2)] | | | 30/70 | 32/68 | 35/65 | 20/80 | 18/82 | 30170 | 18/82 | 20/80 |
| Ip structural unit in (b2) (mol%) | | | - | 50 | 100 | 50 | 100 | 50 | - | - |
| Polymer backbone | | | St-F-St | St-(Bd/Ip)-St | St-Ip-St | St-(Bd/Ip)-St | St-Ip-St | St-(Bd/Ip)-St | St-F-St | F-St-Bd-St-F |
| Physical properties | Styrene block peak top molecular weight (Mp) | | 52,000 | 16,200 | 33,000 | 6,200 | 5,500 | 26,000 | 16,600 | 8,000 |
| | Block copolymer peak top molecular weight (Mp) | | 373,000 | 151,000 | 253,000 | 98,000 | 87,600 | 262,000 | 201,000 | 102,000 |
| | Molecular weight distribution (Mw/Mn) | | 1.18 | 1.02 | 1.06 | 1.02 | 1.03 | 1.05 | 1.23 | 1.50 |
| | Hydrogenation rate (mol%) | | 90.2 | 98.7 | 98.3 | 98.9 | 99.0 | 98.9 | 93.2 | 93.0 |
| | Vinyl bond amount (mol%) | | 7.7 | 7.6 | 5.1 | 7.2 | 4.9 | 8.0 | 7.6 | 31.8 |

Each notation in Table 1 is as follows.

[(a1)/(a2) + (a3)] or [(b1)/(b2)]:

[(a1)/(a2) + (a3)] represents the mass ratio of the content of the polymer block (a1) to the content of the polymer block (a2) (and the polymer block (a3)).
[(b1)/(b2)] represents the mass ratio of the content of the polymer block (b1) to the content of the polymer block (b2).

Polymer backbone:

St-F-St denotes a polystyrene-poly(β-farnesene)-polystyrene triblock copolymer.
St-(Bd/Ip)-St denotes a polystyrene-poly(butadiene/isoprene)-polystyrene triblock copolymer.
St-Ip-St denotes a polystyrene-poly(isoprene)-polystyrene triblock copolymer.
F-St-Bd-St-F denotes a poly(β-farnesene)-polystyrene-polybutadiene-polystyrene-poly(β-farnesene) pentablock copolymer.

[Examples 1 to 11] and [Comparative Examples 1 to 4]

Each component was individually pre-mixed according to the mix proportion shown in Table 2 and Table 3.
Subsequently, the pre-mixed composition was supplied to a hopper using a twin-screw extruder ("ZSK26Mc" manufactured by Coperion GmbH; the number of cylinders: 14) under the conditions of a cylinder temperature of 200°C and a screw rotational speed of 300 rpm. Further, the composition was melt-kneaded, extruded into a strand shape, and cut to produce pellets of the resin composition.

<Measurement and Evaluation>

The following measurement and evaluation were performed using the resin compositions obtained in Examples and Comparative Examples. The results are shown in Table 2 and Table 3.

(1) Biobased Content of Resin Composition

The biobased content (% by mass) of the resin composition was calculated from the mass proportion of the block copolymer (A) and the polyolefin-based resin (D) used in Examples and Comparative Examples and the biobased content of each of the components by the following formula.

$$\text{Biobased content (\% by mass)} = (MA \times XA/100) + (MD \times XD/100)$$

In the above formula, MA represents the mass ratio (% by mass) of the block copolymer (A) to the total mass of the resin composition, and MD represents the mass ratio (% by mass) of the polyolefin-based resin (D) to the total mass of the resin composition. XA (% by mass) represents the biobased content of the block copolymer (A), and XD (% by mass) represents the biobased content of the polyolefin-based resin (D).

(2) Hardness

(2-1) Preparation of Sheet of Resin Composition

Pellets of the resin composition obtained in each example were injection molded by an injection molding machine "EC75SX" (manufactured by Toshiba Machine Co., Ltd.) at a cylinder temperature of 210°C, a mold temperature of 40°C, and an injection pressure of 80 MPa, thereby preparing an injection sheet having a length of 110 mm, a width of 110 mm, and a thickness of 2 mm.

(2-2) Measurement of Hardness

A dumbbell No. 3 test piece (2 mm) was obtained from the injection sheet using a punching blade in accordance with JIS K 6251:2010.
Three of the obtained test pieces were stacked, and the hardness at a thickness of 6 mm was measured in

accordance with JIS K 6253-3:2012 using an indenter of a Type A durometer in thermostatic chambers at room temperature of 23°C and -16°C.

INDEX was calculated by the following formula using a value obtained by measuring the atmospheric temperature at a room temperature of 23°C and a value obtained by measuring the atmospheric temperature in a thermostatic chamber at -16°C.

$$(-16°\text{C hardness}/23°\text{C hardness}) \times 100 \leq 120$$

(3) Surface Roughness

The pellets of the resin composition obtained in each example were injection molded at a cylinder temperature of 210°C and a mold temperature of 40°C into a mold having a size of 100 mm × 35 mm × 5 mm and one surface of which was emboss processed (average maximum height roughness of unevenness: 34 pm) to prepare an emboss processed sheet.

The emboss (unevenness) of the sheet was measured at six points shown in Fig. 1 in accordance with JIS B 0601-2001 under the following measurement conditions by using Surfcorder SE1700α (manufactured by Kosaka Laboratory Ltd.), and the standard deviation was calculated. The smaller the standard deviation, the more uniformly the emboss is transferred.

(Measurement Conditions)

- Probe R: 2 μm
- Feed rate: 0.500 mm/s
- Cut-off: λc = 0.800 mm
- Measured length: 4.000 mm
- Filter: GAUSS (ASME)

(4) Measurement of tan δ

A disc-shaped test piece having a diameter of 8 mm and a thickness of 2 mm was cut out from the sheet produced in the above (2-1). Dynamic viscoelasticity measurement was performed on this test piece under the following conditions using an ARES-G2 rheometer (manufactured by TA Instruments), and tan δ at 150°C and 180°C was calculated.

(Dynamic Viscoelastometer and Measurement Conditions)

· Parallel plate: diameter 8 mm
· Vibration mode: torsional vibration
· Strain amount: 0.1%
· Frequency: 1 Hz
· Measurement temperature: 200°C to 40°C (rapid cooling)
· Cooling rate: 46°C/min

Table 2

| | | | | Example 1 | | Example 2 | | Comparative Example 1 | | Example 3 | | Example 4 | | Comparative Example 2 | |
|---|---|---|---|---|---|---|---|---|---|---|---|---|---|---|---|
| | | | | Parts | % | Parts | % | Parts | % | Parts | % | Parts | % | Parts | % |
| Block copolymer (A-1) | | | | 82 | 47.6 | 82 | 47,6 | 82 | 47.6 | 75 | 45.3 | 75 | 45.3 | 75 | 45.3 |
| Block copolymer (B-1) | | | | 18 | 10.5 | | | | | | | | | | |
| Block copolymer (B-2) | | | | | | 18 | 10.5 | | | | | | | | |
| Block copolymer (B-3) | | | | | | | | | | 25 | 15.4 | | | | |
| Block copolymer (B-4) | | | | | | | | | | | | 25 | 15.4 | | |
| Block copolymer (B-5) | | | | | | | | | | | | | | | |
| Block copolymer (B'-1) | | | | | | | | 18 | 10.5 | | | | | | |
| Block copolymer (B'-2) | | | | | | | | | | | | | | 25 | 15.4 |
| Block copolymer (B'-3) | | | | | | | | | | | | | | | |
| Plasticizer (C) | | | | 28 | 16.3 | 28 | 16.3 | 28 | 16.3 | 37 | 22.5 | 37 | 22.5 | 37 | 22.5 |
| Polyolefin resin (D) | | | bio | 30 | 17.4 | 30 | 17.4 | 17.6 | 17.4 | 16 | 9.8 | 16 | 9.8 | 16 | 9.8 |
| Polypropylene (E-1) | | | homo | 15 | 8.1 | 15 | 8.1 | 8.45 | 8.1 | 11 | 6.9 | 11 | 6.9 | 11 | 6.9 |
| Polypropylene (E-2) | | | block | | | | | | | | | | | | |
| Antioxidant | | | % | 0.1 | | 0.1 | | 0.1 | | 0.1 | | 0.1 | | 0.1 | |
| Biobased content of resin composition | | | % by mass | 48.8 | | 48.8 | | 48.8 | | 40.1 | | 40.1 | | 40.1 | |
| Hardness | Type A | INDEX 23°C = 100 | | Measured value | INDEX | Measured value | INDEX | Measured value | INDEX | Measured value | INDEX | Measured value | INDEX | Measured value | INDEX |
| | | Atmospheric temperature | -16°C | 80 | 119 | 76 | 117 | 78 | 124 | 57 | 119 | 52 | 118 | 54 | 129 |
| | | | 23°C | 67 | 100 | 65 | 100 | 63 | 100 | 48 | 100 | 44 | 100 | 42 | 100 |
| Surface roughness | Rz | Mean value (n = 6) | µm | 28.9 | | 28.3 | | 28.9 | | 27.1 | | 27.1 | | 33.2 | |
| | | Standard deviation | | 4.68 | | 8.32 | | 12.5 | | 11.5 | | 8.43 | | 62.6 | |

(continued)

| | | Example 1 | | Example 2 | | Comparative Example 1 | | Example 3 | | Example 4 | | Comparative Example 2 | |
|---|---|---|---|---|---|---|---|---|---|---|---|---|---|
| | | Parts | % | Parts | % | Parts | % | Parts | % | Parts | % | Parts | % |
| tan δ | 150°C | 0.309 | | 0.266 | | 0.283 | | 0.402 | | 0.403 | | 0.283 | |
| | 180°C | 0.317 | | 0.270 | | 0.287 | | 0.353 | | 0.290 | | 0.323 | |

| | | | | Example 5 | | Example 6 | | Example 7 | | Comparative Example 3 | | Comparative Example 4 | |
|---|---|---|---|---|---|---|---|---|---|---|---|---|---|
| | | | | Parts | % | Parts | % | Parts | % | Parts | % | Parts | % |
| Block copolymer (A-1) | | | | 60 | 22.6 | 60 | 22.6 | 60 | 22.6 | 60 | 22.6 | | |
| Block copolymer (B-1) | | | | | | | | | | | | | |
| Block copolymer (B-2) | | | | | | 40 | 15.1 | 20 | 7.55 | | | | |
| Block copolymer (B-3) | | | | | | | | | | | | | |
| Block copolymer (B-4) | | | | | | | | | | | | | |
| Block copolymer (B-5) | | | | 40 | 15.1 | | | 20 | 7.55 | | | | |
| Block copolymer (B'-1) | | | | | | | | | | | | | |
| Block copolymer (B'-2) | | | | | | | | | | | | | |
| Block copolymer (B'-3) | | | | | | | | | | 40 | 15.1 | 100 | 37.7 |
| Plasticizer (C) | | | | 70 | 26.4 | 70 | 26.4 | 70 | 26.4 | 70 | 26.4 | 70 | 26.4 |
| Polyolefin resin (D) | | | bio | 80 | 30.2 | 80 | 30.2 | 80 | 30.2 | 80 | 30.2 | 80 | 30.2 |
| Polypropylene (E-1) | | | homo | | | | | | | | | | |
| Polypropylene (E-2) | | | block | 15 | 5.6 | 15 | 5.6 | 15 | 5.6 | 15 | 5.6 | 15 | 5.6 |
| Antioxidant | | | % | 0.1 | | 0.1 | | 0.1 | | 0.1 | | 0.1 | |
| Biobased content of resin composition | | | % by mass | 44.1 | | 44.1 | | 44.1 | | 44.1 | | 28.7 | |
| Hardness | Type A | INDEX 23°C = 100 | | Measured value | INDEX | Measured value | INDEX | Measured value | INDEX | Measured value | INDEX | Measured value | INDEX |
| | | Atmospheric temperature | -16°C | 84 | 117 | 82 | 119 | 84 | 118 | 87 | 121 | 89 | 120 |
| | | | 23°C | 72 | 100 | 69 | 100 | 71 | 100 | 72 | 100 | 74 | 100 |

(continued)

| | | | | Example 5 | | Example 6 | | Example 7 | | Comparative Example 3 | | Comparative Example 4 | |
|---|---|---|---|---|---|---|---|---|---|---|---|---|---|
| | | | | Parts | % | Parts | % | Parts | % | Parts | % | Parts | % |
| Surface roughness | Rz | Mean value (n = 6) | μm | 31.1 | | 27.5 | | 30.1 | | 27.2 | | 28.3 | |
| | | Standard deviation | | 7.63 | | 8.69 | | 4.51 | | 12.9 | | 5.62 | |
| tan δ | | 150°C | | 0.464 | | 0.434 | | 0.461 | | 0.418 | | 0.306 | |
| | | 180°C | | 0.494 | | 0.424 | | 0.47 | | 0.414 | | 0.314 | |

Table 3

| | | | | Example 8 | | Example 9 | | Example 10 | | Example 11 | |
|---|---|---|---|---|---|---|---|---|---|---|---|
| | | | | Parts | % | Parts | % | Parts | % | Parts | % |
| Block copolymer (A-1) | | | | 10 | 4.1 | 70 | 31.1 | 60 | 21.41 | | |
| Block copolymer (A-2) | | | | 70 | 28.3 | | | | | | |
| Block copolymer (A-3) | | | | | | | | | | 50 | 19.98 |
| Block copolymer (B-5) | | | | 25 | 10.1 | 30 | 13.3 | 40 | 14.27 | 50 | 19.98 |
| Plasticizer (C) | | | | 80 | 34.0 | 60 | 26.6 | 50 | 17.84 | 50 | 19.98 |
| Polyolefin resin (D) | | | bio | 35 | 14.9 | 45 | 20.0 | 80 | 28.54 | 80 | 31.97 |
| Polypropylene (E-1) | | | homo | 20 | 8.5 | 20 | 8.9 | 50 | 17.84 | 20 | 7.99 |
| Antioxidant | | | % | 0.1 | | 0.1 | | 0.1 | | 0.1 | |
| Biobased content of resin composition | | | % by mass | 40.0 | | 40.1 | | 41.7 | | 40.0 | |
| Hardness | Type A | INDEX 23°C = 100 | | Measured value | INDEX | Measured value | INDEX | Measured value | INDEX | Measured value | INDEX |
| | | Atmospheric temperature | -16°C | 50 | 116 | 68 | 117 | 91 | 111 | 90 | 115 |
| | | | 23°C | 43 | 100 | 58 | 100 | 82 | 100 | 78 | 100 |
| Surface roughness | Rz | Mean value (n = 6) | µm | 28.5 | | 27.0 | | 30.4 | | 31.0 | |
| | | Standard deviation | | 7.54 | | 10.2 | | 7.63 | | 9.50 | |

Each notation in Table 2 and Table 3 is as follows.

· "Parts" means parts by mass in the resin composition.
· "%" means % by mass in the resin composition.

From Table 2, from the comparison between Examples 1 and 2 and Comparative Example 1, the comparison between Examples 3 and 4 and Comparative Example 2, and the comparison between Examples 5 to 7 and Comparative Examples 3 and 4, it is understood that the hardness of the resin composition and the molded body of Examples does not become too high even at a low temperature, and the change in hardness is small even at a low temperature. In addition, from the above comparison, it is understood that the standard deviation of the surface roughness was small and the emboss was satisfactorily transferred to the resin composition and the molded body of Examples.
In addition, from Table 3, it is understood that the resin composition and the molded body of Examples 8 to 11 also had little change in hardness even at a low temperature, and the emboss was satisfactorily transferred.
Therefore, it is understood from Examples that a resin composition and a molded body having a reduced environmental load, less likely to decrease in physical properties even at a low temperature, and excellent moldability were obtained.

Industrial Applicability

It can be expected that the resin composition of the present invention has a reduced environmental load and is excellent in moldability, and that the molded body is less likely to be deteriorated in physical properties even at a low temperature and is excellent in all of flexibility, weather resistance, and rubber elasticity. Therefore, the resin composition and the molded body of the present invention can be suitably used as a molded article such as a sheet, a film, a tube, a hose, or a belt.

Reference Signs List

G: Gate

## Claims

**1.** A resin composition comprising:

a block copolymer (A) comprising a polymer block (a1) comprising a structural unit derived from an aromatic vinyl compound and a polymer block (a2) comprising a structural unit derived from farnesene;
a block copolymer (B) comprising a polymer block (b 1) comprising a structural unit derived from an aromatic vinyl compound and a polymer block (b2) comprising 30 mol% or more of a structural unit derived from isoprene;
a plasticizer (C); and
a biomass-derived polyolefin-based resin (D);
wherein the resin composition has a biobased content of 37% by mass or more.

**2.** The resin composition according to claim 1, wherein a hydrogenation rate of carbon-carbon double bonds in a structural unit derived from a conjugated diene compound in the block copolymer (A) is 70 mol% or more.

**3.** The resin composition according to claim 1 or 2, wherein the aromatic vinyl compound in the polymer block (a1) is styrene.

**4.** The resin composition according to any one of claims 1 to 3, wherein a content of the polymer block (a1) in the block copolymer (A) is 1% to 65% by mass.

**5.** The resin composition according to any one of claims 1 to 4, wherein the block copolymer (A) has a peak top molecular weight of 50,000 to 600,000 as determined by gel permeation chromatography in terms of standard polystyrene.

**6.** The resin composition according to any one of claims 1 to 5, wherein a hydrogenation rate of carbon-carbon double bonds in a structural unit derived from a conjugated diene compound in the block copolymer (B) is 70 mol% or more.

**7.** The resin composition according to any one of claims 1 to 6, wherein the aromatic vinyl compound in the polymer block (b 1) is styrene.

**8.** The resin composition according to any one of claims 1 to 7, wherein a content of the polymer block (b 1) in the block copolymer (B) is 1% to 65% by mass.

**9.** The resin composition according to any one of claims 1 to 8, wherein the block copolymer (B) has a peak top molecular weight of 50,000 to 600,000 as determined by gel permeation chromatography in terms of standard polystyrene.

**10.** The resin composition according to any one of claims 1 to 9, wherein the block copolymer (B) has a vinyl bond amount of 1 to 35 mol%.

**11.** The resin composition according to any one of claims 1 to 10, wherein the plasticizer (C) is a process oil.

**12.** The resin composition according to any one of claims 1 to 11, wherein the biomass-derived polyolefin-based resin (D) has a biobased content of 70% by mass or more.

**13.** The resin composition according to any one of claims 1 to 12, comprising the block copolymer (A) and the block copolymer (B) at a mass ratio [(A)/(B)] of 99/1 to 1/99, and comprising 1 to 350 parts by mass of the plasticizer (C) and 1 to 200 parts by mass of the biomass-derived polyolefin-based resin (D) with respect to 100 parts by mass of the total content of the block copolymer (A) and the block copolymer (B).

**14.** The resin composition according to any one of claims 1 to 13, further comprising 1 to 100 parts by mass of a polyolefin-based resin (E) other than the biomass-derived polyolefin-based resin (D) with respect to 100 parts by mass of the total content of the block copolymer (A) and the block copolymer (B).

**15.** The resin composition according to claim 14, wherein the polyolefin-based resin (E) is polypropylene.

**16.** The resin composition according to any one of claims 1 to 15, wherein the standard deviation of six points of the maximum height roughness Rz measured in accordance with JIS B 0601-2001 when the resin composition is emboss processed by injection molding is 12 or less.

**17.** The resin composition according to any one of claims 1 to 16, wherein the resin composition satisfies the following formula (1):

$$[(-16°\text{C hardness}/23°\text{C hardness}) \times 100 \leq 120] \qquad (1)$$

wherein, the 23°C hardness is a hardness measured at an atmospheric temperature of 23°C according to a type A durometer method of JIS K 6253-2:2012, and the -16°C hardness is a hardness measured at an atmospheric temperature of -16°C according to a type A durometer method of JIS K 6253-2:2012.

**18.** A molded body obtained by using the resin composition according to any one of claims 1 to 17.

[Fig. 1]

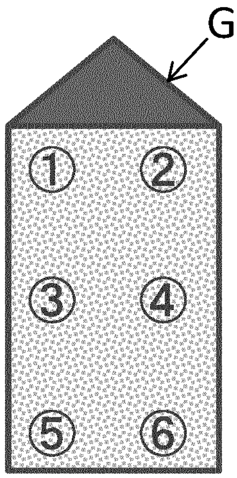

## INTERNATIONAL SEARCH REPORT

International application No. **PCT/JP2022/003193**

**A. CLASSIFICATION OF SUBJECT MATTER**

***C08F 287/00***(2006.01)i; ***C08L 23/02***(2006.01)i; ***C08L 53/00***(2006.01)i; ***C08L 53/02***(2006.01)i; ***C08L 57/02***(2006.01)i; ***C08J 5/18***(2006.01)i

FI: C08L53/00; C08L53/02; C08L23/02; C08L57/02; C08F287/00; C08J5/18 CER

According to International Patent Classification (IPC) or to both national classification and IPC

**B. FIELDS SEARCHED**

Minimum documentation searched (classification system followed by classification symbols)

C08F287/00; C08L23/02; C08L53/00; C08L53/02; C08L57/02; C08J5/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2018/232200 A1 (POLYONE CORP.) 20 December 2018 (2018-12-20) entire text | 1-18 |
| A | JP 5763866 B1 (KURARAY CO., LTD.) 12 August 2015 (2015-08-12) entire text | 1-18 |
| A | JP 5763865 B1 (KURARAY CO., LTD.) 12 August 2015 (2015-08-12) entire text | 1-18 |
| A | WO 2014/156651 A1 (KURARAY CO., LTD.) 02 October 2014 (2014-10-02) entire text | 1-18 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **25 March 2022** | **05 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/003193**

| Patent document cited in search report | Publication date (day/month/year) | Patent family member(s) | Publication date (day/month/year) |
|---|---|---|---|
| WO 2018/232200 A1 | 20 December 2018 | US 2020/0207974 A1<br>entire text<br>EP 3638734 A1<br>CN 110770297 A | |
| JP 5763866 B1 | 12 August 2015 | US 2016/0297956 A1<br>entire text<br>WO 2015/046544 A1<br>EP 2980154 A1<br>KR 10-2015-0126420 A<br>CN 105229076 A | |
| JP 5763865 B1 | 12 August 2015 | US 2016/0108228 A1<br>entire text<br>WO 2015/046524 A1<br>EP 2980153 A1<br>KR 10-2015-0126733 A<br>CN 105246971 A | |
| WO 2014/156651 A1 | 02 October 2014 | US 2016/0053144 A1<br>entire text<br>EP 2980175 A1<br>KR 10-2015-0135300 A<br>CN 105308139 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018232200 A
- JP 2019052225 A
- WO 2020102074 A
- JP 2018024778 A
- JP 2019011472 A
- JP 2012502135 T
- JP 2012502136 T
- JP 2011132298 A